# EUROPEAN PATENT SPECIFICATION

(11) **EP 2 383 592 B1**
(45) Date of publication and mention of the grant of the patent: **20.11.2013**
(21) Application number: 11164015.7
(22) Date of filing: 28.04.2011
(51) Int. Cl.: G02B 6/32, G02B 6/36

(54) **Two dimensional fiber collimator array with low back reflections**
Zweidimensionales Faserkollimatorarray mit niedriger Rückkopplung
Matrice de collimateurs pour fibres optiques avec reflexions reduites

(30) Priority: 28.04.2010 US 769276
(43) Date of publication of application: 02.11.2011
(73) Proprietor: Schleifring und Apparatebau GmbH, 82256 Fürstenfeldbruck (DE)
(72) Inventor: Popp, Gregor, 80636, München (DE)
(74) Representative: Lohr, Georg

(56) References cited:
- EP-A2- 1 331 497
- DE-A1-102004 026 498
- DE-A1-102007 030 258
- DE-A1-102008 001 653
- DE-A1-102009 026 632
- US-A1- 2003 133 687
- US-A1- 2004 047 557
- US-A1- 2008 030 867
- US-B1- 6 483 961

## Description

### Field of the invention

The invention relates to a fiber optic collimator system particularly for use in optical rotary joints, optical rotary joints and a method for manufacturing a fiber collimator array.

### Description of the related art

Various transmission systems are known for transmission of optical signals between units that are rotatable relative to each other.

U.S. Patent No. 5,371,814 discloses an optical rotary joint for a plurality of channels, having a Dove prism. An arrangement having a plurality of GRIN lenses is provided for coupling light into or out of glass fibers. Beam coupling or decoupling is performed by several separate lenses. These lenses must be adjusted individually. A precise adjustment requires a comparatively large amount of time. Furthermore the lenses consume a lot of space. As a result, the area to be projected, i.e. the entire surface projected via the derotating system, increases as the number of channels and the precision in adjustment increases. Therefore, a larger optical system is necessary, which also has a higher optical attenuation as a result of the longer optical paths and, at the same time, involves higher demands on the precision in adjustment.

U.S. Patent No. 5,442,721 discloses another optical rotary joint having bundled collimators assemblies. These allow a further decrease in size and increase in optical quality.

US Patent 7,246,949 B2 discloses a rotary joint using a micro lens array. Fibers are held by a lens system block which is also part of the micro lens system. There is a small air gap between the fiber ends and the micro lens array causing reflections back into the optical fibers.

DE 10 2008 001653 A1 discloses a fiber collimator array with isolated gluing pads. This helps to prevent mechanical tension and ensures long-term stability.

DE 10 2009 026632 A1 discloses a lens system with liquid adjustment of focal points. This is a comparatively complex solution which allows precise individual adjustments.

US 2004/047557 A1 discloses a microlens array having an oblique angle back surface and a fiber holder adapted to this angle. This reduces reflections between the fibers and the microlens array.

DE 10 2004 026498 A1 discloses an epoxy-free fiber collimator array. Here, the back side of a microlens array has specific sections under oblique angles.

### Summary of the invention

The problem to be solved by the invention is to provide a fiber optic collimator, a rotary joint based on the fiber collimator and a method for manufacturing the fiber collimator where the fiber collimator includes a plurality of lenses on a micro lens array.

Solutions of the problem are described in the independent claims. The dependent claims relate to further improvements of the invention.

A fiber optic collimator comprises a lens system having at least one micro lens array. The micro lens array has a first surface with a plurality of micro lenses arranged in a row or a plurality of rows and a second surface opposing the first surface. The second surface is under an oblique angle towards the first surface. The oblique angle is preferably in a range between 5° and 20°, most preferably 7° to 10°. Furthermore the lens system comprises at least one fiber holder attached to the second surface. The fiber holder comprises means for holding optical fibers (light waveguides) like singlemode or multimode fibers. The fibers may be aligned by V-grooves and may be fixed by means of an adhesive, bonding, by welding or other methods. Alternatively the fibers may be held in between two plates. The fiber holder has an end surface to which the fiber ends are aligned.

This end surface is under said oblique angle to a right angle to the fibers and is in contact with the second surface of the micro lens array. The fiber holder is aligned on the micro lens array in such a way that the oblique angle of the second surface of the micro lens array and the oblique angle of the end surface of the fiber holder compensate each other resulting in the fibers being aligned under a right angle to their corresponding lenses. Due to the oblique angle of the surfaces, light from the fibers enters the surface of the micro lens array under such an oblique angle resulting in a significant reduction of reflections back into the fiber.

In a further embodiment instead of micro lens array a combination of a micro lens array and of an optical spacer are used. Here the microlens array may have a second surface parallel to the first surface. The spacer may be wedge shaped and have a first planar surface attached to the second surface of the micro lens array. The second surface of the spacer is planar and under an oblique angle towards its first surface.

In a preferred embodiment the focal lengths of the individual lenses are adapted, preferably equal to the distance between the lens and the second surface of the micro lens array above the lens. This length is corresponding to the length of the optical path between the fiber and the lens.

In another embodiment the individual lenses are designed so that they get the maximum possible focal length to minimize the optical attenuation of all micro lenses in a row focusing on fibers.

In a further embodiment at least two fiber holders are arranged in parallel on said second surface of the lens array.

In a further embodiment a Rotary joint comprises at least one of the above described fiber optic collimators and at least one derotating element like a dove prism.

A method for manufacturing a fiber optic collimator comprises the steps of (i) preparing a micro lens array having a second surface under an oblique angle to a first surface with micro lenses by either grinding and/or polishing the second surface of a micro lens array or directly making such a micro lens array by any manufacturing method of micro lens arrays. Another step (ii) is preparing a fiber holder with attached fibers and an end surface under an oblique angle by grinding and/or polishing the end surface of a fiber holder or directly making such a fiber holder by any micromechanical/micro-optical manufacturing method. Steps (i) and (ii) may be executed at the same time or reversed in their order. The next step (iii) is attaching the fiber holder to the microlens array in such a direction that the oblique angle of the second surface of the micro lens array and the oblique angle of the end surface of the fiber holder compensate each other. Steps (ii) and (iii) may be repeated as many times as necessary to connect all required micro lenses to optical fibers.

### Description of Drawings

In the following, the invention will be described by way of example, without limitation of the general inventive concept, on examples of embodiment and with reference to the drawings.
Figure 1 shows a side view of a collimator system with a micro lens array.
Figure 2 shows another side view of the collimator system.
Figure 3 shows a bottom view of the micro lens array.
Figure 4 shows a side view with marked focus lengths.
Figure 5 shows a collimator system with a micro lens array and a spacer.
Figure 6 shows an optical Rotary joint.

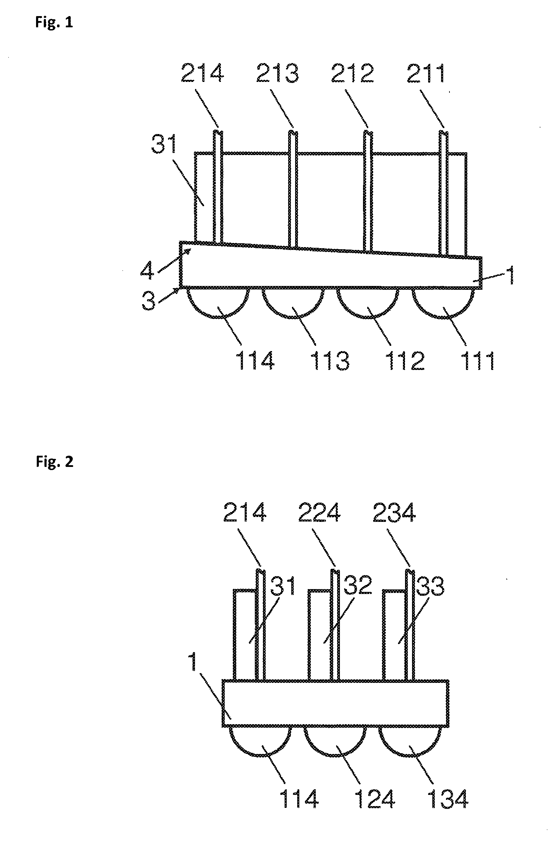

Figure 1 shows a side view of a collimator system with a micro lens array 1. The micro lens array 1 has a first surface 3 with micro lenses 114, 113, 112 and 111.

The opposing second surface 4 is a planar surface under a small angle in relation to the bottom surface. A fiber holder array 31 is attached to the second surface 4 of micro lens array 1. The fiber holder array 31 has a first surface under an angle being adapted to the angle of the second surface of the micro lens array. The fiber holder array 31 is holding individual fibers 214, 213, 212, 211. This results in the individual fibers being arranged under a right angle to their corresponding lenses 114, 113, 112, 111, while the surface angle of the fibers and the corresponding second surface angle of the micro lens array are not under an right angle to the fiber with results in reduction of reflection when light is leaving the fiber and entering the micro lens array or vice versa. Manufacturing is a simple process. The second surface of micro lens array 1 and the corresponding first surface of the fiber holder array 31 have to be grinded and/or polished to obtain the angle.

Figure 2 shows another side view of the collimator system of figure 1 rotated for 90°. Now the fiber holder array 31 is shown from the side. Furthermore additional fiber holder arrays 32 and 33 with their first fiber in the row 224 and 234 are shown.

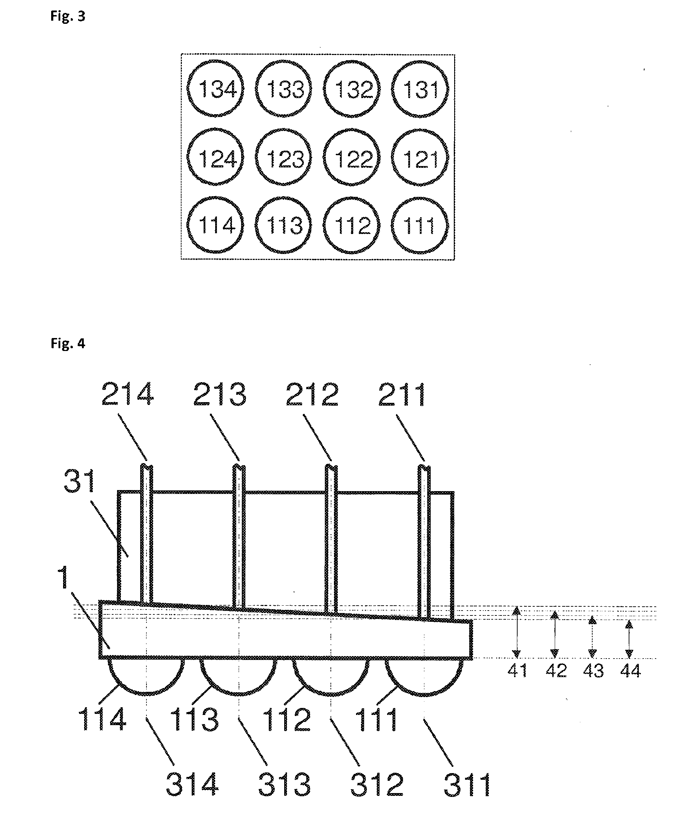

Figure 3 shows a bottom view from the bottom side of the micro lens array. The micro lenses are identified by their numbers in the rows of 111-114, 121-124, and 131-134. Although this configuration shows 3 rows of 4 lenses each, other typical configurations may comprise 3 rows of 9 lenses or any other combination.

Figure 4 shows a side view like figure 1. Each fiber 214, 213, 212, 211 has a longitudinal axis 314, 313, 312, 311 going though the center of the fiber. Furthermore each fiber 214, 213, 212, 211 ending at the first surface of fiber holder 31 has a distance 41, 42, 43, 44 to the second surface of the micro lens array. This distance varies due to the angle of the top second of the micro lens array. If all micro lenses 114, 113, 112, 111 have the same focus length, it is impossible to perfectly focus on all fiber ends, as these fiber ends have different distances to the lenses. To minimize the optical attenuation of all these micro lenses focusing onto fibers the maximum possible, the lenses are designed so that they get the maximum possible focal length. This results in the highest tolerance of the focal position. Furthermore the micro lens array may be made of a material with comparatively high refraction index like silicon. Preferably the material of the fiber holder is adapted to the temperature coefficient of the micro lens array to prevent thermal stress. In the case of a silicon micro lens array this may be also silicon or Pyrex, Borofloat 33, or any other suitable material. Preferably the focal length of lens 114 is adapted to distance 41, focal length of lens 113 is adapted to length 42, focal length of lens 112 is adapted to length 43 and focal length of lens 111 is adapted to length 44.

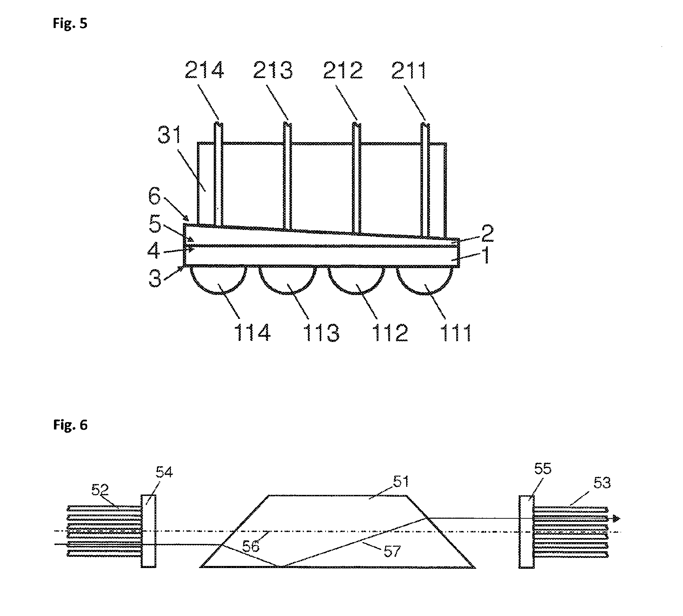

Figure 5 shows another embodiment similar to figure 1. Here the micro lens array 1 has a second surface 4 which is a planar surface parallel to the bottom surface 3. Attached to the micro lens array 1 is a wedge shaped spacer 2 having a first planar surface 5 oriented to the second surface 4 of the micro lens array 1 and further having an opposing second planar surface 6 which is under a small angle to the first surface 5. The fibers 211-214 are attached to the second surface 6 of the spacer 2. It is obvious that the second surface 4of the micro lens array must not be parallel to the first surface 3. Instead there can be any combinations of angles of the second surface 4 of the micro lens array and of corresponding angles of the first surface 5 of the spacer, as long as the the longitudinal axis of the optical fibers are under a right angle to their corresponding micro lenses of the micro lens array.

Figure 6 shows in a schematic form an embodiment of an optical rotary joint having due least one lens system in accordance with the invention at least one of the embodiments described herein. The optical rotary joint shown in Figure 17 comprises a first lens system 54 for coupling of first light-waveguides 52, and also a second lens system 55 for coupling of second light-waveguides 53. The second collimator arrangement 55 is supported to be rotatable relative to the first collimator arrangement 54 about a rotation axis 56. A derotating element in the form of a Dove prism 51 is located in a beam path between the first collimator arrangement 54 and the second collimator arrangement 55 to compensate for the rotary movement. An example of a ray path of a light ray 57 is shown, which starts from one of the first light wave guides 52 and passes via the first collimator arrangement 54, through the Dove prism 51, and via the second collimator arrangement 55 up to and into one of the second light-waveguides 53.

It will be appreciated to those skilled in the art having the benefit of this disclosure that this invention is believed to provide optical rotary joints and micro-optical systems, such as collimators, used for multichannel transmission of optical signals. Further modifications and alternative embodiments of various aspects of the invention will be apparent to those skilled in the art in view of this description. Accordingly, this description is to be construed as illustrative only and is for the purpose of teaching those skilled in the art the general manner of carrying out the invention. It is to be understood that the forms of the invention shown and described herein are to be taken as the presently preferred embodiments. Elements and materials may be substituted for those illustrated and described herein, parts and processes may be reversed, and certain features of the invention may be utilized independently, all as would be apparent to one skilled in the art after having the benefit of this description of the invention.

### List of reference numerals

- 1: micro lens array
- 2: spacer
- 3: first surface of micro lens array
- 4: second surface of micro lens array
- 5: first surface of spacer
- 6: second surface of spacer
- 31: first fiber holder
- 32: second fiber holder
- 33: third fiber holder
- 41: first distance
- 42: second distance
- 43: third distance
- 44: fourth distance
- 51: Derotating optical element
- 52: First light-waveguides
- 53: Second light-waveguides
- 54: First collimator arrangement
- 55: Second collimator arrangement
- 56: Rotation axis
- 57: Light ray
- 111- 114: first row of micro lenses
- 121 - 124: second row of micro lenses
- 131-134: third row of micro lenses
- 211- 214: first row fibers
- 224, 234: fibers
- 311- 314: longitudinal axis of fibers

## Claims

1. A collimator system comprising:
- at least one micro lens array (1) having a first surface (3) with a plurality of micro lenses and a second surface (4) opposing the first surface under an oblique angle,
- at least one fiber holder array (31, 32, 33), each holding in parallel a number of individual optical fibers (211, 212, 213, 214), each optical fiber defining a longitudinal axis through the center of each fiber, the fiber holder array having a first surface under said oblique angle to the right angle to the longitudinal axis the fibers,
whereby
said at least one fiber holder array (31, 32, 33) is attached to said at least one micro lens array (1) in such a way that the oblique angles of the second surface of the micro lens array and the first surface of the fiber holder compensate for each other so that the longitudinal axis of the optical fibers are under a right angle to their corresponding micro lens of the micro lens array, and the focus lengths of the individual lenses are adapted to the distance between the lens and the second surface of the micro lens array above the lens, whereby at least two fiber ends have different distances to their corresponding lenses.

2. A collimator system comprising:
- at least one micro lens array (1) having a first surface (3) with a plurality of micro lenses and a second surface (4) parallel to the first surface,
- at least one spacer (2) having a first surface attached to the second surface of the at least one micro lens array and further having a second surface opposing the first surface under an oblique angle,
- at least one fiber holder array (31, 32, 33), each holding in parallel a number of individual optical fibers (211, 212, 213, 214), each optical fiber defining a longitudinal axis through the center of each fiber, the fiber holder array having a first surface under said oblique angle to the right angle to the longitudinal axis the fibers,
whereby
said at least one fiber holder array (31, 32, 33) is attached to said at least one spacer (2) in such a way that the oblique angles of the second surface of the spacer and the first surface of the fiber holder compensate for each other so that the longitudinal axis of the optical fibers are under a right angle to their corresponding micro lens of the micro lens array, and the focus lengths of the individual lenses are adapted to the distance between the lens and the second surface of the micro lens array above the lens, whereby at least two fiber ends have different distances to their corresponding lenses.

3. The collimator system according to any one of the preceding claims,
**characterized in, that**
the optical fibers (211, 212, 213, 214) are bonded, glued or welded to the fiber holder.

4. The collimator system according to any one of the preceding claims,
**characterized in, that**
the fiber holder is bonded, glued or welded to the micro lens array.

5. The collimator system according to any one of the preceding claims,
**characterized in, that**
a plurality of fiber holders are attached in parallel to the micro lens array.

6. The collimator system according to any one of the preceding claims,
**characterized in, that**
the individual micro lenses are designed so that they get the maximum possible focal length to minimize the optical attenuation of all micro lenses in a row focusing on fibers.

7. Rotary joint comprising at least one collimator system according to any one of the preceding claims and at least one derotating element like a dove prism.

8. Method for manufacturing a collimator system comprising the steps of
I. preparing a micro lens array (1) having a second surface (4) under an oblique angle to a first surface (3) with micro lenses by either grinding and/or polishing the second surface of the micro lens array or directly making the micro lens array by any manufacturing method of micro lens arrays, such that the focus lengths of the individual lenses are adapted to the distance between the lens and the second surface of the micro lens array above the lens, whereby at least two fiber ends have different distances to their corresponding lenses,
II. preparing a fiber holder (31) with attached fibers (211, 212, 213, 214) and an end surface under an oblique angle by either grinding and/or polishing the end surface of a fiber holder or directly making such a fiber holder by any micromechanical/micro-optical manufacturing method,
III. attaching the fiber holder to the microlens array in such a direction that the oblique angle of the second surface of the micro lens array and the oblique angle of the end surface of the fiber holder compensate each other.

9. Method according to claim 8 by repeating steps II. and III.;

10. Method for manufacturing a collimator system comprising the steps of
I. preparing a spacer (2) from an optical material having a second surface under an oblique angle to a first surface by either grinding and/or polishing the second surface of the spacer or directly making such a spacer by any manufacturing method of micro lens arrays;
II. attaching the spacer to a micro lens system (1);
III. preparing a fiber holder (31) with attached fibers (211, 212, 213, 214) and an end surface under an oblique angle by either grinding and/or polishing the end surface of a fiber holder or directly making such a fiber holder by any micromechanical/micro-optical manufacturing method;
IV. attaching the fiber holder (31) to the second surface of the spacer (2) attached to the microlens array in such a direction that the oblique angle of the second surface of the micro lens array and the oblique angle of the end surface of the fiber holder compensate each other, whereby the focus length of the individual lenses are adapted to the distance between the lens and the second surface of the micro lens array above the lens, whereby at least two fiber ends have different distances to their corresponding lenses.

11. Method according to claim 10 by repeating steps II. and III.;

## Patentansprüche

1. Kollimatoranordnung, umfassend:
- mindestens eine Mikrolinsenanordnung (1), die eine erste Oberfläche (3) mit mehreren Mikrolinsen und eine zweite Oberfläche (4) aufweist, welche der ersten Oberfläche in einem schrägen Winkel gegenüber liegt,
- mindestens eine Faserhalteranordnung (31, 32, 33), die jeweils eine Anzahl einzelner optischer Fasern (213, 214) parallel zueinander hält, wobei jede optische Faser eine Längsachse durch die Mitte jeder Faser festlegt und die Faserhalteranordnung eine erste Oberfläche aufweist, die in dem schrägen Winkel zum rechten Winkel zur Längsachse der Fasern liegt,
wobei
die mindestens eine Faserhalteranordnung (31, 32, 33) an der mindestens eine Mikrolinsenanordnung (1) in der Weise befestigt ist, dass die schrägen Winkel der zweiten Oberfläche der Mikrolinsenanordnung und der ersten Oberfläche des Faserhalters einander in der Weise kompensieren, dass die Längsachsen der optischen Fasern in einem rechten Winkel zu deren entsprechender Mikrolinse der Mikrolinsenanordnung stehen und die Fokallängen der einzelnen Linsen an den Abstand zwischen der Linse und der zweiten Oberfläche der Mikrolinsenanordnung oberhalb der Linse angepasst sind; wobei mindestens zwei Faserenden verschiedene Abstände zu deren entsprechenden Linsen aufweisen.

2. Kollimatorsystem umfassend:
- mindestens eine Mikrolinsenanordnung (1); die eine erste Oberfläche (3) mit mehreren Mikrolinsen und eine zweite Oberfläche (4) parallel zu der ersten Oberfläche aufweist,
- mindestens einen Abstandshalter (2), welcher eine erste; an der zweiten Oberfläche der mindestens einen Mikrolinsenanordnung befestigte Oberfläche aufweist und des Weiteren eine der ersten Oberfläche in einem schrägen Winkel gegenüber liegende zweite Oberfläche aufweist,
- mindestens eine Faserhalteranordnung (31, 32, 33), die jeweils eine Anzahl einzelner optischer Fasern (211, 212, 213, 214) parallel zueinander hält, wobei jede optische Faser eine Längsachse durch die Mitte jeder Faser festlegt und die Faserhalteranordnung eine erste Oberfläche in dem schrägen Winkel zum rechten Winkel zur Längsachse der Fasern aufweist,
wobei
die mindestens eine Faserhalteranordnung (31. 32. 33) in der Weise an dem mindestens einen Abstandshalter (2) befestigt ist, dass die schrägen Winkel der zweiten Oberfläche des Abstandshalters und der ersten Oberfläche des Faserhalters einander in der Weise kompensieren, dass die Längsachsen der optischen Fasern in einem rechten Winkel zu deren entsprechender Mikrolinse der Mikrolinsenanordnung stehen und die Fokallängen der einzelnen Linsen an den Abstand zwischen der Linse und der zweiten Oberfläche der Mikrolinsenanordnung oberhalb der Linse angepasst sind, wobei mindestens zwei Faserenden verschiedene Abstände zu deren entsprechenden Linsen aufweisen.

3. Kollimatorsystem nach einem der vorhergehenden Ansprüche,
**dadurch gekennzeichnet, dass**
die optischen Fasern (211, 212, 213, 214) an den Faserhalter gebondet, geklebt oder geschweißt sind.

4. Kollimatorsystem nach einem der vorhergehenden Ansprüche,
**dadurch gekennzeichnet, dass**
der Faserhalter an die Mikrolinsenanordnung geklebt oder geschweißt ist.

5. Kollimatorsystem nach einem der vorhergehenden Ansprüche,
**dadurch gekennzeichnet, dass**
mehrere Faserhalter in Parallelanordnung an der Mikrolinsenanordnung befestigt sind..

6. Kollimatorsystem nach einem der vorhergehenden Ansprüche,
**dadurch gekennzeichnet, dass**
die einzelnen Mikrolinsen in der Weise ausgelegt sind, dass sie die maximal mögliche Fokallänge zur Minimierung der optischen Abschwächung aller auf Fasern fokussierende Mikrolinsen in einer Reihe aufweisen.

7. Drehübertrager, umfassend mindestens ein Kollimatorsystem nach einem der vorhergehenden Ansprüche und mindestens ein derotierendes Element wie ein Dove-Prisma.

8. Verfahren zur Herstellung eines Kollimatorsystems, umfassend die Schritte:
I. Vorbereiten einer Mikrolinsenanordnung (2), die eine zweite Oberfläche (4) in einem schrägen Winkel zu einer ersten Oberfläche (3) mit Mikrolinsen aufweist, entweder durch Schleifen und/oder Polieren der zweiten Oberfläche der Mikrolinsenanordnung oder durch direktes Anfertigen der Mikrolinsenanordnung gemäß jeglichem Herstellverfahren von Mikrolinsenanordnungen, in der Weise, dass die Fokallängen der einzelnen Linsen an den Abstand zwischen der Linse und der zweiten Oberfläche der Mikrolinsenanordnung oberhalb der Linse angepasst sind, wobei mindestens zwei Faserenden verschiedene Abstände von deren entsprechenden Linsen aufweisen,
II.Vorbereiten eines Faserhalters (31) mit daran befestigten Fasern (211, 212, 213, 214) und einer Endoberfläche in schrägem Winkel entweder durch Schleifen oder Polieren der Endoberfläche eines Faserhalters oder durch direktes Anfertigen eines derartigen Faserhalters gemäß jeglichem mikromechanischen/mikrooptischen Herstellverfahren,
III: Befestigen des Faserhalters an der Mikrolinsenanordnung in einer Richtung derart, dass der schräge Winkel der zweiten Oberfläche der Mikrolinsenanordnung und der schräge Winkel der Endoberfläche des Faserhalters einander kompensieren.

9. Verfahren nach Anspruch 8 durch Wiederholen der Schritte II. und III.

10. Verfahren zur Herstellung eines Kollimatorsystems, umfassend die Schritte:
I. Vorbereiten eines Abstandshalters (2) aus einem optischen Werkstoff, mit einer zweiten Oberfläche in einem schrägen Winkel gegenüber einer ersten Oberfläche, entweder durch Schleifen und/oder Polieren der zweiten Oberfläche des Abstandshalters oder durch direktes Anfertigen eines derartigen Abstandshalters gemäß jeglichem Herstellverfahren von Mikrolinsenanordnungen,
II. Befestigen des Abstandshalters an ein Mikrolinsensystem (1),
III. Vorbereiten eines Faserhalters (31) mit daran befestigten Fasern (211, 212; 213, 214) und einer Endoberfläche in einem schrägen Winkel entweder durch Schleifen und/oder Polieren der Endoberfläche eines Faserhalters oder durch direktes Anfertigen eines derartigen Faserhalters gemäß jeglichem mikromechanischen/mikrooptischen Herstellverfahren,
IV. Befestigen des Faserhalters (31) an die zweite Oberfläche des an die Mikrolinsenanordnung befestigten Abstandshalters (2) in einer Richtung derart, dass der schräge Winkel der zweiten Oberfläche der Mikrolinsenanordnung und der schräge Winkel der Endoberfläche des Faserhalters einander kompensieren, wobei die Fokallänge der einzelnen Linsen angepasst sind an den Abstand zwischen der Linse und der zweiten Oberfläche der Mikrolinsenanordnung oberhalb der Linse, wobei mindestens zwei Faserenden verschiedene Abstände zu ihren entsprechenden Linsen aufweisen.

11. Verfahren nach Anspruch 10, durch Wiederholen der Schritte II. und III.

## Revendications

1. Un système de collimateur comprenant :
- au moins un arrangement de microlentilles (1) ayant une première surface (3) avec une pluralité de microlentilles et une deuxième surface (4) à l'opposé de la première surface sous un angle oblique,
- au moins un arrangement de support de fibre (31, 32, 33), chacune soutenant en parallèle un nombre de fibres optiques individuelles (211, 212, 213, 214), chaque fibre optique définissant un axe longitudinal au travers du centre de chaque fibre, l'arrangement de support de fibre ayant une première surface sous ledit angle oblique vers l'angle droit par rapport à l'axe longitudinal des fibres, où,
au moins un arrangement de support de fibre (31, 32, 33) est attachée au moins à un arrangement de microlentille (1) de sorte que les angles obliques de la deuxième surface d'arrangement de microlentilles et la première surface du support de fibre se compensent l'une et l'autre pour que l'axe longitudinal des fibres optiques soient sous un angle droit par rapport à leur microlentille correspondante d'arrangement de microlentilles, et les distances focales des lentilles individuelles soient adaptées à la distance entre la lentille et la deuxième surface de l'arrangement de microlentilles au-dessus de la lentille, où au moins deux extrémités de fibres ont des distances différentes de leurs lentilles correspondantes.

2. Un système de collimateur comprenant :
- au moins un arrangement de microlentilles (1) ayant une première surface (3) avec une pluralité de microlentilles et une deuxième surface (4) parallèle à la première surface,
- au moins un espaceur (2) ayant une première surface attachée à la deuxième surface d'au moins un arrangement de microlentilles et ayant de plus une deuxième surface à l'opposé de la première surface sous un angle oblique,
- au moins un arrangement de support de fibre (31, 32, 33), chacune soutenant en parallèle un nombre de fibres optiques individuelles (211, 212, 213, 214), chaque fibre optique définissant un axe longitudinal au travers du centre de chaque fibre, l'arrangement de support de fibre ayant une première surface sous ledit angle oblique dans l'angle droit par rapport à l'axe longitudinal des fibres, où
au moins un arrangement de support de fibre (31, 32, 33) est attachée à au moins un espaceur (2) de sorte que les angles obliques de la deuxième surface de l'espaceur et la première surface du support de fibre se compensent l'une et l'autre pour que l'axe longitudinal des fibres optiques soient sous un angle droit par rapport à leurs microlentilles correspondantes d'arrangement de microlentilles, et les distances focales des lentilles individuelles soient adaptées à la distance entre la lentille et la deuxième surface d'arrangement de microlentilles au-dessus de la lentille, où au moins deux extrémités de fibre ont des distances différentes jusqu'à leurs lentilles correspondantes.

3. Le système de collimateur selon l'une des revendications précédentes,
**caractérisé en ce que**
les fibres optiques (211, 212, 213, 214) sont liées, collées ou soudées au support de fibre.

4. Le système de collimateur selon l'une des revendications précédentes,
**caractérisé en ce que**
le support de fibre est lié, collé ou soudé au arrangement de microlentilles.

5. Le système de collimateur selon l'une des revendications précédentes,
**caractérisé en ce que**
une pluralité des supports de fibre sont attachés en parallèle avec le arrangement de microlentilles.

6. Le système de collimateur selon l'une des revendications précédentes,
**caractérisé en ce que**
les microlentilles individuelles sont conçues afin d'obtenir la distance focale maximum possible pour minimiser l'atténuation optique de toutes les microlentilles dans une rangée se concentrant sur les fibres.

7. Un joint tournant comprenant au moins un système de collimateur selon l'une des revendications précédentes et au moins un élément de dérotation comme un prisme de Dove.

8. Méthode pour fabriquer un système de collimateur comprenant les étapes de :
I. préparation d'un arrangement de microlentilles (1) ayant une deuxième surface (4) sous un angle oblique par rapport à une première surface (3) avec des microlentilles en meulant et/ou polissant la deuxième surface d'arrangement de microlentilles ou bien directement en fabricant le arrangement de microlentilles par une méthode de fabrication de arrangementx de microlentilles, de sorte que les distances focales des lentilles individuelles soient adaptées à la distance entre la lentille et la deuxième surface d'arrangement de microlentilles au-dessus de la lentille, où au moins deux extrémités de fibre ont des distances différentes de leurs lentilles correspondantes.
II. préparation d'un support de fibre (31) avec des fibres attachées (211, 212, 213, 214) et une surface finale sous un angle oblique soit en meulant et/ou en polissant la surface finale d'un support de fibre ou en fabricant directement un tel support de fibre par une méthode de fabrication micromécanique / micro-optique,
III. fixation du support de fibre au arrangement de microlentilles dans une telle direction que l'angle oblique de la deuxième surface d'arrangement de microlentilles et l'angle oblique de la surface finale du support de fibre se compensent l'un et l'autre.

9. Une méthode selon la revendication 8 répétant les étapes II. et III. ;

10. Une méthode de fabrication d'un système de collimateur comprenant les étapes de :
I. préparation d'un espaceur (2) à partir d'un matériau optique ayant une deuxième surface sous un angle oblique par rapport à une première surface soit en meulant et/ou polissant la deuxième surface de l'espaceur ou bien directement en fabricant un tel espaceur par toute méthode de fabrication de arrangementx de microlentilles ;
II. fixation de l'espacteur à un système de microlentilles (1) ;
III. préparation d'un support de fibre (31) avec des fibres attachées (211, 212, 213, 214) et une surface finale sous un angle oblique soit en meulant et/ou en polissant la surface finale d'un support de fibre ou bien directement en fabricant un tel support de fibre par une méthode de fabrication micromécanique / micro-optique ;
IV. fixation du support de fibre (31) à la deuxième surface de l'espaceur (2) attachée au arrangement de microlentilles dans une telle direction que l'angle oblique de la deuxième surface d'arrangement de microlentilles et l'angle oblique de la surface finale du support de fibre se compensent l'un et l'autre, où la distance focale des lentilles individuelles est adaptée à la distance entre la lentille et la deuxième surface d'arrangement de microlentilles au-dessus de la lentille, où au moins deux extrémités finales ont différentes distances par rapport à leurs lentilles correspondantes.

11. Une méthode selon la revendication 10 répétant les étapes II. et III. ;
